# FASCICULE DE BREVET EUROPEEN

(11) **EP 3 302 904 B1**
(45) Date de publication et mention de la délivrance du brevet: **11.12.2019**
(21) Numéro de dépôt: 16729029.5
(22) Date de dépôt: 17.05.2016
(51) Int. Cl.: B26D 1/06, B26D 3/26, B26D 3/28, B26D 7/01, B26D 7/00

(54) **APPAREIL AMÉLIORÉ DE DÉCOUPE POUR FRUITS OU LÉGUMES**
VERBESSERTE VORRICHTUNG FÜR DAS SCHNEIDEN VON OBST ODER GEMÜSE
IMPROVED DEVICE FOR THE CUTTING OF FRUIT OR VEGETABLES

(30) Priorité: 08.06.2015 FR 1555210
(43) Date de publication de la demande: 11.04.2018
(73) Titulaire: SEB S.A., 69130 Ecully (FR)
(72) Inventeur: PLICHON, Stéphane, 74350 Allonzier-la Caille (FR); BENOIT, David, 74540 Gruffy (FR)
(74) Mandataire: Bourrières, Patrice
(86) Numéro de dépôt international: PCT/FR2016/051162
(87) Numéro de publication internationale: WO 2016/198760

(56) Documents cités:
- WO-A1-2005/090029
- CN-U- 202 053 285
- US-A1- 2008 168 660

## Description

La présente invention concerne un appareil de découpe d'aliments, notamment de fruits ou de légumes, destiné à être utilisé pour la préparation d'aliments, notamment pour trancher ou râper. L'invention concerne plus particulièrement un appareil de découpe muni d'une lame de coupe, destinée à être animée d'un mouvement de va-et-vient par l'utilisateur vis à vis de l'aliment. Ce type d'appareil à main est communément appelé mandoline.

On connaît notamment du document EP1410882, un appareil de découpe d'aliments, notamment des fruits ou des légumes comportant une base dans laquelle est agencée une plaque de découpe munie d'une lame de découpe ainsi qu'une poignée agencée de manière coulissante sur la base. La poignée comporte un logement de réception de l'aliment à couper. Pour découper l'aliment, l'utilisateur pousse l'aliment à l'aide de la poignée contre la lame de découpe dans un mouvement de va-et-vient.

Cependant, le logement de réception est de petite dimension et n'assure pas toujours un bon maintien de l'aliment à découper. Ainsi, l'utilisateur est incité à ne pas utiliser la poignée et à maintenir et à déplacer directement à la main l'aliment à découper au-dessus de la lame de découpe. Une telle utilisation peut entrainer des accidents, notamment des coupures au niveau des doigts et est donc particulièrement dangereuse.

De plus, un tel appareil de découpe ne permet pas de découper les aliments longs, par exemple les concombres ou les carottes qu'en rondelles. En effet, la forme du logement de réception n'autorise qu'un positionnement vertical des aliments longs au-dessus de la lame de coupe.

De plus, les aliments découpés tombent sur le plan de travail. L'utilisateur peut éventuellement disposer sous la lame de découpe un réservoir de collecte des aliments découpés de faible hauteur. Cependant, un tel mode de fonctionnement n'est pas très ergonomique.

CN 202053285 U décrit un appareil de découpe d'aliments comportant une base avec une surface mobile de réception de l'aliment et au moins une lame de coupe et un dispositif de guidage en translation de la lame de coupe destinée à être animée d'un mouvement de va-et-vient par l'utilisateur au-dessus de l'aliment.

Le but de la présente invention est de remédier aux inconvénients précités et de proposer un appareil de découpe d'aliments présentant une ergonomie optimisée pour permettre à l'utilisateur de trancher ou râper des aliments facilement, en toute sécurité.

Un autre but de l'invention est de proposer un appareil de découpe d'aliments qui soit de conception simple et économique à mettre en œuvre.

Un autre but de l'invention est de proposer un appareil de découpe d'aliments qui puisse être nettoyé et rangé facilement.

Ces buts sont atteints avec un appareil de découpe d'aliments, notamment des fruits ou des légumes, comportant une base et au moins une lame de coupe, caractérisé en ce que la base comporte une surface de réception de l'aliment et un dispositif de guidage en translation de la lame de coupe, destinée à être animée d'un mouvement de va-et-vient par l'utilisateur au-dessus de l'aliment. L'aliment à découper est donc déposé sur la surface de réception fixe de la base et la lame de coupe est mobile. Ainsi, en utilisation, la main de l'utilisateur manœuvre la lame de coupe mobile et ne se déplace plus par rapport à cette lame de coupe. En conséquence, le risque de coupure des doigts est supprimé. Par surface de réception fixe, on comprend que la surface de réception est fixe par rapport à à la base et par rapport à un plan de pose de l'appareil de découpe.

Dans son mouvement de va-et-vient, la lame de coupe est appliquée avec une pression sur l'aliment reposant sur la surface de réception fixe de la base. La pression est appliquée par l'utilisateur qui peut adapter cette pression, notamment au type d'aliment à découper. La découpe peut ainsi être régulière et de qualité. De préférence, la base comporte des moyens de maintien de l'aliment sur la surface de réception, ces moyens de maintien étant avantageusement constitués par des pics.

Cette disposition permet d'immobiliser l'aliment à découper sur la surface de réception, notamment des aliments longs en position allongée.

Avantageusement, la lame de coupe est portée par un tiroir de découpe.

De préférence, la lame de coupe est agencée de manière amovible sur le tiroir de découpe.

Par amovible ou démontable, on comprend que la lame de coupe et le tiroir de découpe peuvent être séparés par l'utilisateur facilement, sans nécessiter la mise en œuvre d'un outil.

Ainsi la lame de coupe peut être échangée avec une lame de coupe présentant une géométrie différente, par exemple pour râper ou effiler.

De préférence, l'appareil de découpe comporte un récipient formant avec le tiroir de découpe un réservoir de collecte des aliments découpés.

Ainsi, le tiroir de découpe et la lame de coupe forment au moins partiellement le fond du réservoir.

Cette disposition permet de collecter les aliments découpés dans un réservoir fermé, sans risque de les répandre sur le plan de travail. Un tel appareil de découpe d'aliments présente donc une ergonomie optimisée.

Avantageusement, la base comporte deux bords qui s'étendent selon une direction longitudinale et le dispositif de guidage comporte deux rampes qui sont agencées respectivement au-dessus des bords et qui s'étendent selon la direction longitudinale.

La lame de coupe est destinée à coopérer avec les rampes, notamment en glissant, pour permettre à l'utilisateur de mettre la lame de coupe en mouvement au-dessus de l'aliment à découper.

Avantageusement, le tiroir de découpe comporte deux guides latéraux destinés à coopérer avec les rampes.

Cette disposition permet d'obtenir un tiroir de découpe, qui porte la lame de coupe, mobile en translation selon l'axe longitudinal et ainsi, l'utilisateur peut imprimer à la lame de coupe un mouvement de va-et-vient au-dessus de l'aliment à découper.

De préférence, les rampes sont mobiles verticalement par rapport à la base, entre une position haute de sortie et une position basse rétractée.

De manière avantageuse, les rampes sont mobiles en translation verticale.

Ainsi, la position du tiroir de découpe qui est en appui sur les rampes mobiles et sur l'aliment s'adapte en continu à l'épaisseur résiduelle de l'aliment à découper. La distance entre la surface de réception et le tiroir de découpe reposant sur les rampes en position basse rétractée est proche de zéro et correspond à un aliment complètement découpé.

Avantageusement, les rampes et les moyens de maintien, notamment les pics de maintien sont solidaires.

Ainsi, les moyens de maintien, notamment les pics sont mobiles en même temps que les rampes entre une position haute de sortie et une position basse rétractée. Dans la position haute de sortie, les moyens de maintien, notamment les pics présentent une longueur maximum de maintien de l'aliment qui va être découpé. Au fur et à mesure de la découpe, les moyens de maintien, notamment les pics vont passer de la position haute de sortie à la position basse rétractée et leur longueur va ainsi s'adapter à l'épaisseur résiduelle de l'aliment à découper.

Dans un mode de fonctionnement légèrement dégradé, l'utilisateur peut commencer à découper un aliment très épais en positionnant le tiroir de découpe au-dessus des rampes. Les moyens de maintien, notamment les pics étant dans la position haute de sortie, ils maintiennent bien l'aliment. Puis, au cours de la découpe de l'aliment, le tiroir de découpe va venir en appui sur les rampes mobiles pour notamment adapter la position de sortie des moyens de maintien, notamment des pics à l'épaisseur résiduelle de l'aliment.

De préférence, l'appareil de découpe comporte un système de guidage en translation des rampes sur la base, ledit système de guidage comportant notamment des colonnes, avantageusement agencées à proximité des bords de la base.

Cette disposition permet d'obtenir un guidage en translation des rampes dans la base particulièrement simple, efficace et économique à réaliser.

De manière avantageuse, la surface de réception comporte des perforations qui coopérent avec les pics. Le système de guidage en translation des rampes sur la base comporte les perforations et les pics.

Dans une variante de réalisation, les rampes comportent chacune un élément de jonction avec une platine, la base comportant des ouvertures verticales à travers lesquelles passent les éléments de jonction. Avantageusement, le système de guidage en translation des rampes sur la base comporte les éléments de jonction et les ouvertures verticales.

Avantageusement, la base comporte des moyens de rappel des rampes en position haute de sortie, lesdits moyens de rappel étant notamment des moyens ressorts.

Cette disposition permet de maintenir le contact entre le tiroir de découpe et les rampes pendant la découpe de l'aliment.

Avantageusement, le récipient comporte une face externe qui forme une partie de préhension.

Cette disposition permet d'obtenir un réservoir de collecte des aliments découpés compact, sans partie de préhension supplémentaire.

De préférence, le récipient est agencé de manière amovible sur le tiroir de découpe.

Ainsi, le récipient agencé sur le tiroir de découpe forme un réservoir de collecte des aliments découpés. Le récipient amovible du tiroir de découpe permet de vider facilement le réservoir. Cette disposition permet donc d'obtenir un appareil de découpe particulièrement ergonomique pour ce qui concerne la manipulation des aliments découpés.

De plus, la face externe du récipient formant la partie de préhension recouvre la lame de coupe et rend cette dernière inaccessible à la main de l'utilisateur. La partie de préhension présente une surface de préhension importante permettant une prise en main sûre. Ainsi, on obtient un appareil de découpe pouvant être utilisé en toute sécurité.

Avantageusement, l'appareil de découpe comporte un pied antidérapant, notamment une ventouse.

Cette disposition permet d'utiliser l'appareil de découpe sur tout type de support, notamment lisse ou humide, sur lequel il pourrait glisser lors de son utilisation.

L'invention sera mieux comprise à l'étude du mode de réalisation pris à titre nullement limitatif et illustré dans les figures annexées dans lesquelles :
- La figure 1 illustre une vue en perspective éclatée d'un dispositif de découpe selon un mode particulier de réalisation de l'invention, les rampes et les pics étant en position haute de sortie.
- La figure 2 illustre une vue en perspective du dispositif de découpe, selon une direction II illustrée sur la figure 1, les rampes et les pics étant en position basse rétractée.
- La figure 3 illustre une vue en perspective du dispositif de découpe, selon la direction III illustrée sur la figure 1.
- La figure 4 illustre une vue schématique en coupe du dispositif de découpe suivant la ligne IV - IV illustré à la figure 3.
- La figure 5 illustre une vue en perspective éclatée de la base du dispositif de découpe illustré à la figure 3.

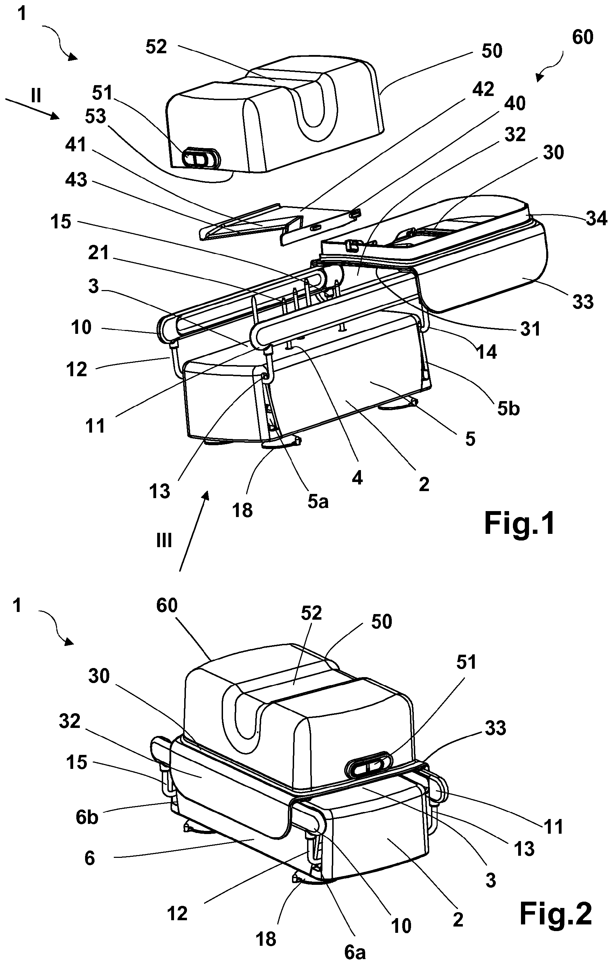

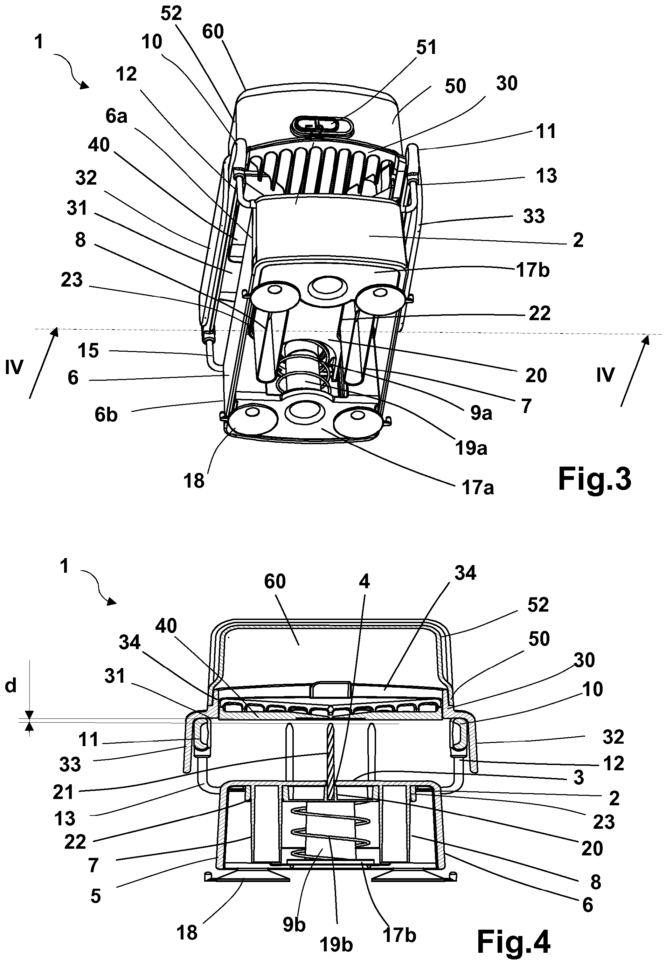

Selon le mode de réalisation visible aux figures 1 à 5, un appareil de découpe d'aliments 1 comporte une base 2 munie de deux rampes 10, 11 de guidage latérales destinées à coopérer avec un tiroir de découpe 30 muni d'une lame de coupe 40. La base 2 présente une forme parallélépipédique qui comporte une surface plane supérieure formant une surface de réception 3 de l'aliment à découper. Une platine 20 (Fig. 3 à 5) est agencée à l'intérieur de la base 2, sous la surface de réception 3. La platine 20 comporte des pics 21 formés par des tiges métalliques qui s'étendent vers le haut à travers des perforations 4 ménagées dans la surface de réception 3.

La base 2 comporte deux bords 5, 6 au-dessus desquels sont agencées les rampes 10, 11. Les rampes 10, 11 présentent une section sensiblement rectangulaire et s'étendent longitudinalement sur la longueur de la base 2. Les rampes 10, 11 comportent à chacune de leur extrémité un élément de jonction 12, 13, 14, 15 avec la platine 20. L'élément de jonction 12, 13, 14, 15 est formé par un fil métallique plié solidaire des rampes 10, 11 et de la platine 20. Les bords 5, 6 comportent des ouvertures verticales 5a, 5b, 6a, 6b à travers lesquelles passent les éléments de jonction 12, 13, 14, 15.

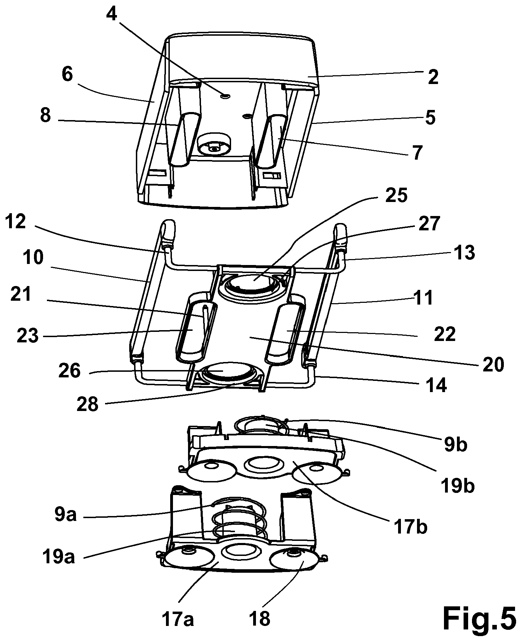

Les rampes 10, 11, les pics 21 et la platine 20 forme un ensemble (Fig.5) qui est mobile en translation verticale par rapport à la base 2 entre une position haute de sortie (Fig. 1, 3 et 4) et une position basse rétractée (Fig.2). Tel que visible aux figures 4 et 5, la base 2 comporte deux colonnes 7, 8 de section oblongue s'étendant verticalement à partir de la surface de réception 3. La platine 20 comporte deux ouvertures 22, 23 destinées à coopérer avec les colonnes 7, 8 de section oblongue pour assurer le guidage en translation de la platine 20.

Tel que visible à la figure 5, la base 2 comporte deux demi-capots inférieurs 17a, 17b comportant respectivement des colonnes 19a et 19b de section circulaire. La base 2 comporte des moyens de rappel de l'ensemble formés par les rampes 10, 11, les pics 21 et la platine 20 en position haute de sortie. Les moyens de rappel comportent deux ressorts 9a, 9b agencés autour des deux colonnes 19a, 19b agencées dans deux ouvertures 25, 26. Les deux ressorts 9a, 9b prennent appui sur deux épaulements 27, 28 de la platine 20 et sur la base des demi-capots inférieurs 17a, 17b. Les demi-capots inférieurs 17a, 17b comportent quatre pieds 18 antidérapants formés par des ventouses.

Tel que visible à la figure 1, l'appareil de découpe 1 comporte un ensemble mobile qui est formé par le tiroir de découpe 30 munie de la lame de coupe 40 et un récipient 50 et qui est destiné à coopérer avec les rampes 10, 11 pour permettre à l"utilisateur d'imprimer un mouvement de va-et-vient de la lame de coupe 40 au-dessus de l'aliment à découper. Cet ensemble forme un réservoir 60 de collecte des aliments découpés.

Le tiroir de découpe 30 présente une forme sensiblement rectangulaire et comporte une face inférieure 31 et deux guides latéraux 32, 33 s'étendant vers le bas destinés à coopérer avec les rampes 10, 11.

La lame de coupe 40 comporte une partie 41 métallique et un cadre 42. Le cadre 42 est obtenu par une opération de surmoulage sur la partie 41 métallique. La lame de coupe 40 est agencée de manière détachable du tiroir de découpe 30. La partie 41 métallique comporte une arête tranchante 43 qui dépasse de la face inférieure 31 du tiroir de découpe 30 d'une hauteur e qui détermine l'épaisseur de la partie découpée de l'aliment. Lorsque le tiroir de coupe 30 est posée sur les rampes 10, 11, les extrémités des pics 21 sont disposées à une distance d (Fig.4) de la face inférieure 31 qui est supérieure à la hauteur e.

Le récipient 50 est agencé sur le tiroir de découpe 30 de manière détachable. Le récipient 50 comprend une ouverture 53 qui coopère avec une bordure périphérique supérieure 34 du tiroir de découpe 30 pour former le réservoir 60 de collecte. Avantageusement, le récipient 50 comporte un verrou 51 mobile entre une position de verrouillage du récipient 50 sur le tiroir de découpe 30 et une position de déverrouillage du récipient 50 sur le tiroir de découpe 30.

Le récipient 50 comporte une face externe 52 qui forme une zone de préhension du réservoir 60 de collecte.

En fonctionnement, l'utilisateur plante l'aliment à découper sur les pics 21 jusqu'à ce que ce dernier soit en appui sur la surface de réception 3. Puis, l'utilisateur choisit la lame de coupe 40 correspondant au type de découpe souhaité et l'assemble sur le tiroir de découpe 30. Il assemble ensuite le récipient 50 sur le tiroir de découpe 30 pour former le réservoir 60 de réception des aliments découpés. Il saisit la face externe 52 du récipient 50 qui fait office d'organe de préhension, positionne les guides latéraux 32, 33 le long des rampes 10, 11 et pose la face inférieure 31 du tiroir de découpe 30 sur les rampes 10, 11, au-dessus de l'aliment à découper. Il appuie ensuite sur le récipient 50 pour faire translater les rampes 10, 11 vers le bas et ainsi amener en contact la face inférieure 31 du tiroir de découpe 30 avec l'aliment. L'arête tranchante 43 de la lame de coupe 40 est positionnée en face de l'aliment.

L'utilisateur déplace en translation horizontale l'ensemble formé par le récipient 50 et le tiroir de découpe 30 muni de la lame de coupe 40, ce qui a pour conséquence de trancher une partie d'épaisseur e de l'aliment. L'utilisateur ramène ensuite l'ensemble en position initiale. Il appuie sur le récipient 50 pour amener la face inférieure 31 du tiroir de découpe 30 en contact avec l'aliment en faisant translater les rampes 10, 11 et les pics 21 vers le bas sur une course égale à l'épaisseur e.

L'utilisateur va ensuite répéter le mouvement de va-et-vient autant de fois que nécessaire pour découper complètement l'aliment dont les morceaux découpés sont collectés dans le réservoir 60.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, l'appareil de découpe comporte un organe de blocage des rampes et des pics en position haute de sortie pour permettre l'insertion des pics dans l'aliment à découper lors de sa mise place sur la surface de réception.

Dans une autre variante de réalisation, le système de guidage en translation des rampes sur la base comporte des biellettes de guidage de la platine.

## Revendications

1. Appareil de découpe d'aliments (1), notamment des fruits ou des légumes comportant une base (2), au moins une lame de coupe (40), **caractérisé en ce que** la base (2) comporte une surface de réception (3) fixe de l'aliment et un dispositif de guidage (10, 11) en translation de la lame de coupe (40) destinée à être animée d'un mouvement de va-et-vient par l'utilisateur au-dessus de l'aliment et **caractérisé en ce que** le dispositif de guidage comporte des rampes (10, 11) mobiles verticalement par rapport à la base (2) entre une position haute de sortie et une position basse rétractée et comporte un système de guidage en translation des rampes sur la base (2), ledit système de guidage comportant des colonnes (7, 8).

2. Appareil de découpe d'aliments (1) selon la revendication 1, **caractérisé en ce que** la base (2) comporte des moyens de maintien de l'aliment sur la surface de réception (3), ces moyens de maintien étant avantageusement constitués par des pics (18)

3. Appareil de découpe d'aliments (1) selon l'une quelconque des revendications 1 à 2, **caractérisé en ce que** la lame de coupe (40) est portée par un tiroir de découpe (30).

4. Appareil de découpe d'aliments (1) selon la revendication 3, **caractérisé en ce que** la lame de coupe (40) est agencée de manière amovible sur le tiroir de découpe (30).

5. Appareil de découpe d'aliments (1) selon l'une quelconque des revendications 3 à 4, **caractérisé en ce qu'**il comporte un récipient (50), formant avec le tiroir de découpe (30) un réservoir (60) de collecte des aliments découpés.

6. Appareil de découpe d'aliments (1) selon l'une quelconque des revendications 1 à 5, **caractérisé en ce que** la base (2) comporte deux bords (5, 6) qui s'étendent selon une direction longitudinale et **en ce que** le dispositif de guidage comporte deux rampes (10, 11) qui sont agencées respectivement au-dessus des bords (5, 6) et qui s'étendent selon la direction longitudinale.

7. Appareil de découpe d'aliments (1) selon la revendication 6, **caractérisé en ce que** le tiroir de découpe (30) comporte deux guides latéraux (32, 33) destinés à coopérer avec les rampes (10, 11).

8. Appareil de découpe d'aliments (1) selon l'une quelconque des revendications 1 à 7, **caractérisé en ce que** les rampes (10, 11) sont mobiles en translation verticale.

9. Appareil de découpe d'aliments (1) selon l'une quelconque des revendications 1 à 8, **caractérisé en ce que** les rampes (10, 11) et les moyens de maintien, notamment les pics (21) de maintien sont solidaires.

10. Appareil de découpe d'aliments (1) selon l'une quelconque des revendications 1 à 9, **caractérisé en ce que** les colonnes (7, 8) du système de guidage, sont agencées à proximité des bords (5, 6) de la base (2).

11. Appareil de découpe d'aliments (1) selon l'une quelconque des revendications 1 à 10, **caractérisé en ce que** le système de guidage en translation des rampes sur la base (2) comporte des éléments de jonction (12, 13, 14, 15) et les ouvertures verticales (5a, 5b, 6a, 6b).

12. Appareil de découpe d'aliments (1) selon l'une quelconque des revendications 1 à 10, **caractérisé en ce que** la base (2) comporte des moyens de rappel des rampes (10, 11) en position haute de sortie, lesdits moyens de rappel étant notamment des moyens ressorts (9a, 9b).

13. Appareil de découpe d'aliments (1) selon l'une quelconque des revendications 5 à 12, **caractérisé en ce que** le récipient (50) comporte une face externe (52) qui forme une partie de préhension.

14. Appareil de découpe d'aliments (1) selon l'une quelconque des revendications 5 à 13, **caractérisé en ce que** le récipient (50) est agencé de manière amovible sur le tiroir de découpe (30).

15. Appareil de découpe d'aliments (1) selon l'une des revendications 1 à 14, **caractérisé en ce qu'**il comporte au moins un pied antidérapant (18), notamment une ventouse.

## Patentansprüche

1. Gerät zum Schneiden von Nahrungsmitteln (1), insbesondere Obst oder Gemüse, aufweisend eine Basis (2), mindestens eine Schneidklinge (40), **dadurch gekennzeichnet, dass** die Basis (2) eine feststehende Fläche zur Aufnahme (3) von Nahrungsmitteln und eine Vorrichtung zur linearen Führung (10, 11) der Schneidklinge (40) aufweist, die dazu bestimmt ist, vom Benutzer über die Nahrungsmittel in eine Hin- und Herbewegung versetzt zu werden, und dass die Vorrichtung zur Führung Rampen (10, 11) aufweist, die relativ zu der Basis (2) zwischen einer oberen Ausgangsposition und einer unteren zurückgezogenen Position vertikal beweglich sind, und ein System zur linearen Führung der Rampen auf der Basis (2) aufweist, wobei das System zur Führung Säulen (7, 8) aufweist.

2. Gerät zum Schneiden von Nahrungsmitteln (1) nach Anspruch 1, **dadurch gekennzeichnet, dass** die Basis (2) Mittel zum Halten des Nahrungsmittels auf der Aufnahmeoberfläche (3) aufweist, wobei diese Mittel zum Halten vorteilhafterweise aus Spitzen (18) bestehen.

3. Gerät zum Schneiden von Nahrungsmitteln (1) nach einem der Ansprüche 1 bis 2, **dadurch gekennzeichnet, dass** die Schneidklinge (40) von einem Schneideinschub (30) getragen wird.

4. Gerät zum Schneiden von Nahrungsmitteln (1) nach Anspruch 3, **dadurch gekennzeichnet, dass** die Schneidklinge (40) abnehmbar auf dem Schneideinschub (30) angeordnet ist.

5. Gerät zum Schneiden von Nahrungsmitteln (1) nach einem der Ansprüche 3 bis 4, **dadurch gekennzeichnet, dass** es einen Behälter (50) aufweist, der mit dem Schneideinschub (30) einen Tank (60) zum Sammeln von geschnittenen Nahrungsmitteln bildet.

6. Gerät zum Schneiden von Nahrungsmitteln (1) nach einem der Ansprüche 1 bis 5, **dadurch gekennzeichnet, dass** die Basis (2) zwei in einer Längsrichtung verlaufende Kanten (5, 6) aufweist, und dass die Führungsvorrichtung zwei Rampen (10, 11) aufweist, die jeweils oberhalb der Kanten (5, 6) angeordnet sind und die sich in der Längsrichtung erstrecken.

7. Gerät zum Schneiden von Nahrungsmitteln (1) nach Anspruch 6, **dadurch gekennzeichnet, dass** der Schneideinschub (30) zwei seitliche Führungen (32, 33) aufweist, die dazu bestimmt sind, mit den Rampen (10, 11) zusammenzuwirken.

8. Gerät zum Schneiden von Nahrungsmitteln (1) nach einem der Ansprüche 1bis 7, **dadurch gekennzeichnet, dass** die Rampen (10,11) vertikal linear bewegbar sind.

9. Gerät zum Schneiden von Nahrungsmitteln (1) nach einem der Ansprüche 1 bis 8, **dadurch gekennzeichnet, dass** die Rampen (10, 11) und die Mittel zum Halten, insbesondere die Spitzen (21) zum Halten einstückig sind.

10. Gerät zum Schneiden von Nahrungsmitteln (1) nach einem der Ansprüche 1 bis 9, **dadurch gekennzeichnet, dass** die Säulen (7, 8) des Systems zur Führung in der Nähe der Ränder (5, 6) der Basis (2) angeordnet sind.

11. Gerät zum Schneiden von Nahrungsmitteln (1) nach einem der Ansprüche 1 bis 10, **dadurch gekennzeichnet, dass** das System zur linearen Führung der Rampen auf der Basis (2) Verbindungselemente (12, 13, 14, 15) und die vertikalen Öffnungen (5a, 5b, 6a, 6b) aufweist.

12. Gerät zum Schneiden von Nahrungsmitteln (1) nach einem der Ansprüche 1 bis 10, **dadurch gekennzeichnet, dass** die Basis (2) Mittel zum Zurückstellen der Rampen (10, 11) in die obere Ausgangsposition aufweist, wobei die Mittel zum Zurückstellen insbesondere Federmittel (9a, 9b) sind.

13. Gerät zum Schneiden von Nahrungsmitteln (1) nach einem der Ansprüche 5 bis 12, **dadurch gekennzeichnet, dass** der Behälter (50) eine Außenseite (52) aufweist, die einen Griffteil bildet.

14. Gerät zum Schneiden von Nahrungsmitteln (1) nach einem der Ansprüche 5 bis 13, **dadurch gekennzeichnet, dass** der Behälter (50) abnehmbar an dem Schneideinschub (30) angeordnet ist.

15. Gerät zum Schneiden von Nahrungsmitteln (1) nach einem der Ansprüche 1 bis 14, **dadurch gekennzeichnet, dass** es mindestens einen rutschfesten Fuß (18), insbesondere einen Saugnapf, umfasst.

## Claims

1. Appliance for cutting food (1), particularly fruit or vegetables comprising a base (2), at least one cutting blade (40), **characterised in that** the base (2) comprises a fixed surface for receiving (3) the food and a device (10, 11) for translatably guiding the cutting blade (40) intended to be moved back and forth by the user over the food and **characterised in that** the device for guiding comprises ramps (10, 11) that are vertically mobile with respect to the base (2) between a high extended position and a low retracted position and comprises a system for translatably guiding ramps on the base (2), said system for guiding comprising columns (7, 8).

2. Appliance for cutting food (1) according to claim 1, **characterised in that** the base (2) comprises means for maintaining the food on the receiving surface (3), with these means being advantageously formed by peaks (18)

3. Appliance for cutting food (1) according to any of claims 1 to 2, **characterised in that** the cutting blade (40) is carried by a cutting compartment (30).

4. Appliance for cutting food (1) according to claim 3, **characterised in that** the cutting blade (40) is removably arranged on the cutting compartment (30).

5. Appliance for cutting food (1) according to any of claims 3 to 4, **characterised in that** it comprises a recipient (50), that form with the cutting compartment (30) a reservoir (60) for collecting cut food.

6. Appliance for cutting food (1) according to any of claims 1 to 5, **characterised in that** the base (2) comprises two edges (5, 6) that extend in a longitudinal direction and **in that** the device for guiding comprises two ramps (10, 11) which are respectively arranged above edges (5, 6) and which extend in the longitudinal direction.

7. Appliance for cutting food (1) according to claim 6, **characterised in that** the cutting compartment (30) comprises two lateral guides (32, 33) intended to cooperate with the ramps (10, 11).

8. Appliance for cutting food (1) according to any of claims 1 to 7, **characterised in that** the ramps (10, 11) are mobile in vertical translation.

9. Appliance for cutting food (1) according to any of claims 1 to 8, **characterised in that** the ramps (10, 11) and the means for maintaining, in particular the peaks (21) for maintaining are integral.

10. Appliance for cutting food (1) according to any of claims 1 to 9, **characterised in that** the columns (7, 8) of the system for guiding, are arranged in the vicinity of the edges (5, 6) of the base (2).

11. Appliance for cutting food (1) according to any of claims 1 to 10, **characterised in that** the system for translatably guiding ramps on the base (2) comprises junction elements (12, 13, 14, 15) and the vertical openings (5a, 5b, 6a, 6b).

12. Appliance for cutting food (1) according to any of claims 1 to 10, **characterised in that** the base (2) comprises means for returning ramps (10, 11) in high extended position, said means for returning being in particular spring means (9a, 9b).

13. Appliance for cutting food (1) according to any of claims 5 to 12, **characterised in that** the recipient (50) comprises an outer face (52) that form a grasping portion.

14. Appliance for cutting food (1) according to any of claims 5 to 13, **characterised in that** the recipient (50) is removably arranged on the cutting compartment (30).

15. Appliance for cutting food (1) according to one of claims 1 to 14, **characterised in that** it comprises at least one anti-slip foot (18), in particular a suction cup.
